# EUROPEAN PATENT APPLICATION

(11) **EP 4 717 439 A1**
(43) Date of publication of application: **01.04.2026**
(21) Application number: 25190991.7
(22) Date of filing: 22.07.2025
(51) Int. Cl.: B29C 49/06, B29C 45/76, B29C 45/78, B29C 49/42, B29C 49/78, B29C 45/04, B29C 49/12, B29C 49/30, B29C 49/02, B29C 49/48, B29L 31/00

(54) **INJECTION BLOW MOLDING APPARATUS AND INJECTION BLOW MOLDING METHOD**

(30) Priority: 26.09.2024 JP 2024167080
(71) Applicant: Sumitomo Heavy Industries, Ltd., Tokyo 141-6025 (JP)
(72) Inventor: SATO, Takayuki, Chiba, 263-0001, (JP); TAKAHASHI, Rei, Chiba, 263-0001, (JP); YOSHIDA, Junichi, Chiba, 263-0001 (JP); NAKAMURA, Toru, Chiba, 263-0001 (JP); TANI, Ryosuke, Chiba, 263-0001, (JP)
(74) Representative: Louis Pöhlau Lohrentz

(57) **Abstract**

Provided are an injection blow molding apparatus (1) and an injection blow molding method capable of setting the temperature of a preform (610) to a temperature at which the preform (610) can be released and the preform (610) is expanded by blowing air. An injection blow molding apparatus (1) includes a male mold portion (51b); a female mold portion (12); a gripping mold portion (42); an injection unit that injects a resin for molding a preform (610) into inner surfaces of the female mold portion (12), the male mold portion (51b), and the gripping mold portion (42); a blow unit that is released from the female mold portion (12) and the male mold portion (51b) and blows air into the preform (610) in a state in which the gripping mold portion (42) has gripped the preform (610); and a control unit (70) that releases the preform (610) from the male mold portion (51b) before the preform (610) is released from the female mold portion (12) in a mold release process of releasing the preform (610) from the female mold portion (12) and the male mold portion (51b).

## Description

### BACKGROUND OF THE INVENTION

### Field of the Invention

The present invention relates to an injection blow molding apparatus and an injection blow molding method.

### Description of Related Art

For example, in the apparatus described in Japanese Patent No. 3824360, a preform molding station, a blow molding station, and a transfer station located between the preform molding station and the blow molding station, which are broadly classified, are provided on a machine base. The preform molding station has injection core molds at two locations separated by a rotation angle of 180°, and has a turntable that intermittently circulates and conveys the injection core molds along a rotary conveyance path. An injection molding unit is provided at a position facing an injection device at the stop position of each injection core mold, and a removal unit is provided to face the injection molding unit. The injection molding unit has an injection cavity mold that is relatively driven for mold clamping with respect to the injection core mold, and simultaneously injection-molds, for example, four preforms. A neck portion of the preform is molded by a neck cavity mold, and the preform is held by the neck cavity mold and the injection core mold, and is conveyed to the removal unit by the turntable. In the removal unit, after partial mold release from the injection core mold, the preform is removed by releasing the preform from the neck cavity mold. In addition, the apparatus described in the Japanese Patent No. 3824360 is provided with a receiving unit that receives a preform from the transfer station, a heating unit that heats the preform received by the receiving unit to a blow molding temperature or higher, a blow molding unit that performs stretch blow molding on the preform heated by the heating unit to obtain a container, and a container removal unit that removes the container blow-molded by the blow molding unit to the outside of the apparatus.

### SUMMARY OF THE INVENTION

In the apparatus described in Japanese Patent No. 3824360, a plurality of preforms are simultaneously injection-molded, the preforms are cooled by the injection core mold, the preforms are cooled to a temperature at which the preforms can be removed, and then, the preforms are removed from the injection core mold at the removal unit. Then, before the blow molding is performed by the blow molding unit, the preform is heated to the blow molding temperature or higher by the heating unit.

On the other hand, in an apparatus that does not include the heating unit that heats the preform, it is desired that the temperature of the molded preform is set to a temperature at which the preform can be released and the preform is expanded by blowing air.

An object of the present invention is to provide an injection blow molding apparatus and an injection blow molding method capable of setting the temperature of a preform to a temperature at which the preform can be released and the preform is expanded by blowing air.

The present invention that has completed under such an object is an injection blow molding apparatus including: a male mold portion; a female mold portion; a gripping mold portion; an injection unit that injects a resin for molding a preform into inner surfaces of the female mold portion, the male mold portion, and the gripping mold portion; a blow unit that is released from the female mold portion and the male mold portion and blows air into the preform in a state in which the gripping mold portion has gripped the preform; and a control unit that releases the preform from the male mold portion before the preform is released from the female mold portion in a mold release process of releasing the preform from the female mold portion and the male mold portion.

The present invention that has been completed under such an object is an injection blow molding method including: an injection process of molding a preform on inner surfaces of a male mold portion, a female mold portion, and a gripping mold portion; a mold release process of releasing the preform from the female mold portion and the male mold portion in a state in which the gripping mold portion has gripped the preform; and a blow process of blowing air into the preform in a state in which the gripping mold portion has gripped the preform. In the mold release process, the male mold portion is released from the preform before the preform is released from the female mold portion.

Here, a temperature of a trunk portion of the preform after the mold release process and before the blow process may be set to be higher than a temperature of a tip part of the preform.

In addition, the temperature of the trunk portion of the preform may be set to 90°C or higher and lower than 120°C, and the temperature of the tip part of the preform may be set to 70°C or higher and lower than 100°C.

In addition, a temperature of a trunk portion of the preform may be set to 100°C or higher and lower than 110°C, and a temperature of a tip part of the preform may be set to 80°C or higher and lower than 90°C.

In addition, in the injection process, the preform may be molded such that a thickness of a tip part of the preform is larger than a thickness of a trunk portion of the preform.

According to the present invention, the temperature of the preform can be set to a temperature at which the preform can be released and the preform is expanded by blowing air.

### BRIEF DESCRIPTION OF THE DRAWINGS

FIG. 1 is a view of an example of a cross section of an injection blow molding machine according to an embodiment as viewed in an up-down direction.
FIG. 2 is a view of a cross section of the injection blow molding machine according to the embodiment as viewed in a second direction.
FIG. 3A is a view showing an example of a cross section before a preform is molded. FIG. 3B is a view showing an example of a cross section after the preform is molded.
FIG. 4A is a view showing an example of a cross section before a final molding product is molded. FIG. 3B is a view showing an example of a cross section after the final molding product is molded.
FIGS. 5A to 5D are views showing an example of an injection blow molding method.
FIGS. 6A and 6B are views showing an example of a mold release process according to the embodiment.
FIG. 7 is a view showing an example of a mold release process according to a comparative example.
FIG. 8 is a view showing an example of a relationship between the temperature of a trunk portion and a tip part of a preform after a transition process and the quality of a final molding product.

### DETAILED DESCRIPTION OF THE INVENTION

Hereinafter, embodiments of the present invention will be described in detail with reference to the accompanying drawings.

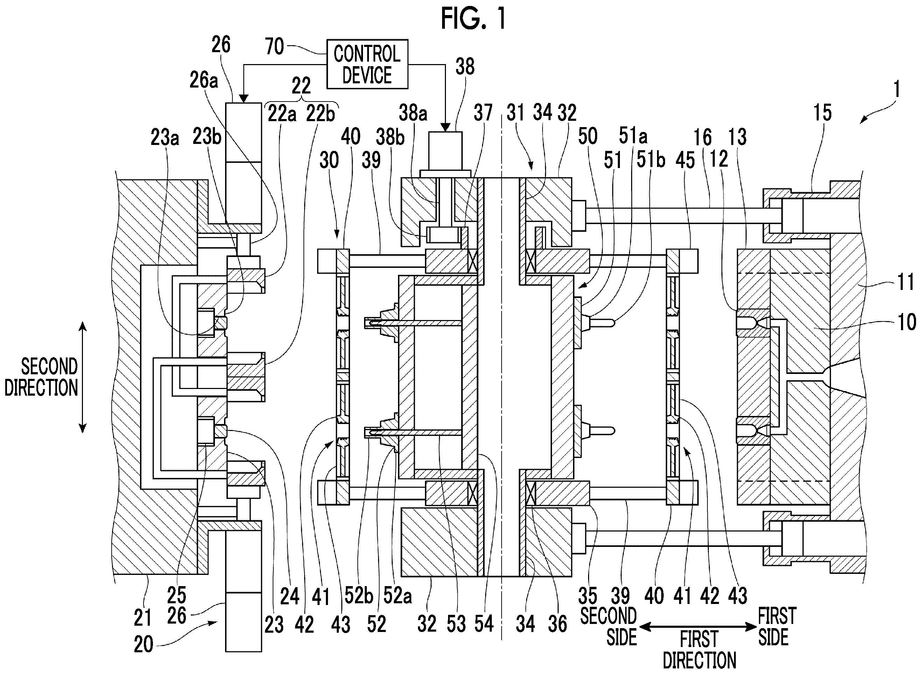

FIG. 1 is a view of an example of a cross section of an injection blow molding machine 1 according to an embodiment as viewed in an up-down direction.

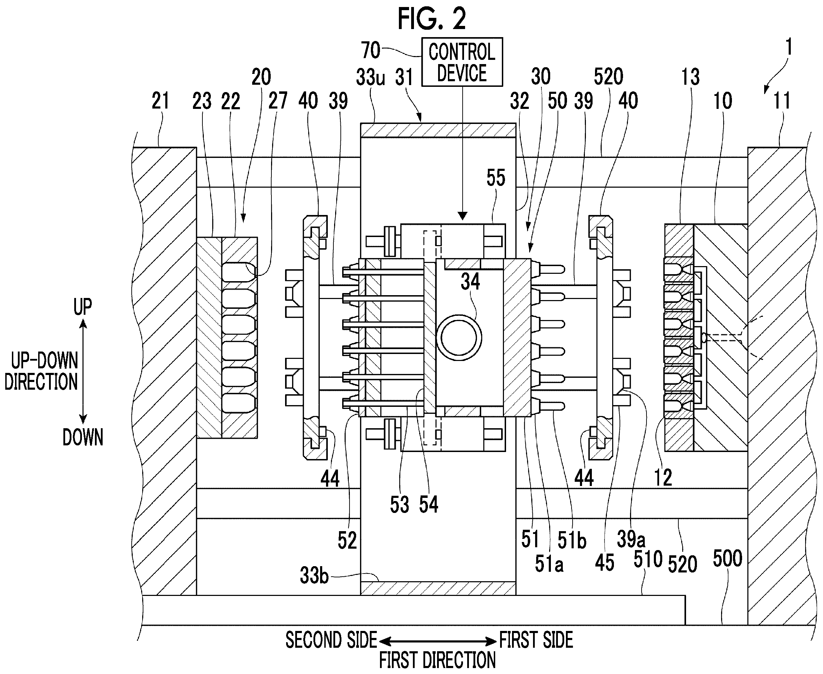

FIG. 2 is a view of an example of a cross section of the injection blow molding machine 1 according to the embodiment as viewed in a second direction.

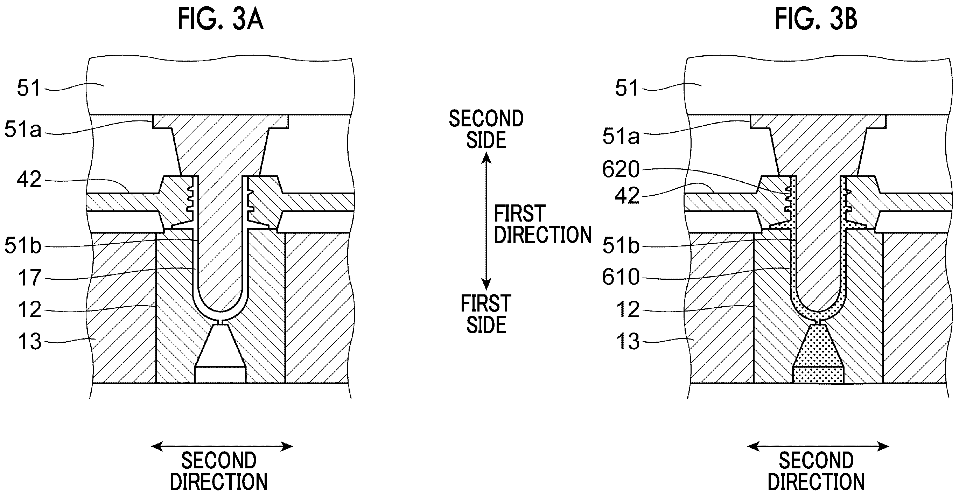

FIG. 3A is a view showing an example of a cross section before a preform 610 is molded. FIG. 3B is a view showing an example of a cross section after the preform 610 is molded.

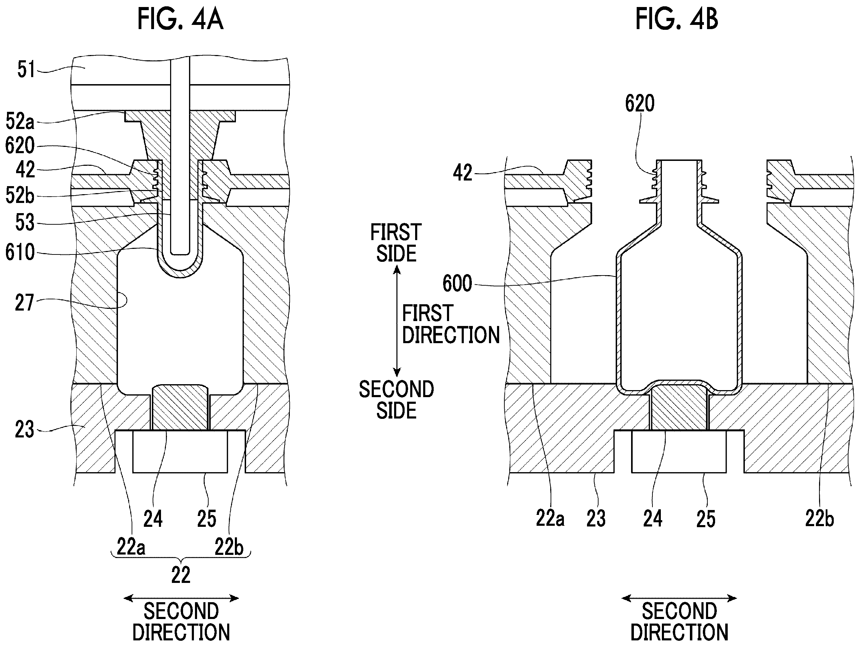

FIG. 4A is a view showing an example of a cross section before the final molding product 600 is molded. FIG. 4B is a view showing an example of a cross section after the final molding product 600 is molded.

FIGS. 1 and 2 show a mold opening state.

The injection blow molding machine 1 is an apparatus that performs injection molding and blow molding. The injection blow molding machine 1 molds, by injection molding, a preform 610, which is an intermediate molding product and has, for example, a test tube shape, and molds, by blow molding, a final molding product 600 such as a container by blowing air into the preform 610 at a pressure enough to expand the preform 610 to expand the preform 610.

The injection blow molding machine 1 includes the stationary mold 10, a movable mold 20 that is movable with respect to the stationary mold 10, and an intermediate mold 30 that is disposed between the stationary mold 10 and the movable mold 20. The injection blow molding machine 1 performs the injection molding at an injection station between the stationary mold 10 and the intermediate mold 30 by mold-closing the stationary mold 10 and the intermediate mold 30. In addition, the injection blow molding machine 1 performs the blow molding at a blow station between the intermediate mold 30 and the movable mold 20 by mold-closing the intermediate mold 30 and the movable mold 20. Hereinafter, the movement direction (in other words, a left-right direction in FIGS. 1 and 2) of the movable mold 20 with respect to the stationary mold 10 may be referred to as a "first direction". In addition, in the first direction, there is a case where a side where the stationary mold 10 is disposed is referred to as a "first side" and a side where the movable mold 20 is disposed is referred to as a "second side". In addition, the injection blow molding machine 1 is disposed such that the up-down direction in FIG. 2 is a vertical direction. Hereinafter, the up-down direction in FIG. 2 may be simply referred to as an "up-down direction". In addition, a direction (in other words, the up-down direction in FIG. 1) perpendicular to the first direction and the up-down direction may be referred to as a "second direction".

The injection blow molding machine 1 includes a stationary platen 11 fixed to a frame 500 fixed to a floor to hold the stationary mold 10, and a movable platen 21 slidably attached to a guide member 510 on the frame 500 to hold the movable mold 20. In addition, the injection blow molding machine 1 includes an intermediate mold support frame 31 that supports the intermediate mold 30 and is slidably attached to a guide member 510 between the stationary platen 11 and the movable platen 21.

In addition, the injection blow molding machine 1 includes an injection device (not shown) that injects resin into a cavity 17 formed between the stationary mold 10 and the intermediate mold 30 on a side opposite to the stationary mold 10 with respect to the stationary platen 11.

In addition, the injection blow molding machine 1 includes a mold clamping device (not shown) on a side opposite to the movable mold 20 with respect to the movable platen 21. The mold clamping device has a mold clamping cylinder device (not shown) for driving the movable platen 21 and a support plate (not shown) to which the mold clamping cylinder device is attached. The support plate and the stationary platen 11 are connected to each other by a plurality (for example, four) of tie bars 520.

The stationary platen 11 is fixed to the frame 500 by bolts or the like. The movable platen 21 and the intermediate mold support frame 31 are mainly supported from below by the guide member 510 and move in the first direction along the tie bars 520.

In addition, the injection blow molding machine 1 includes a plurality of female mold portions 12 and a cavity plate 13 that holds the plurality of female mold portions 12. In the present embodiment, a total of twelve female mold portions 12 are provided to form two rows each having six female mold portions 12 arranged in the up-down direction, and the cavity plate 13 holding the twelve female mold portions 12 is attached to the stationary mold 10.

The movable mold 20 has the movable blow split mold 22, a first bottom mold 23, a second bottom mold 24, and a suction device 25 that suctions the final molding product 600.

The movable blow split mold 22 has the drive-side movable portion 22a and the driven-side movable portion 22b that are disposed to face each other. The drive-side movable portion 22a and the driven-side movable portion 22b are moved in the second direction by a split mold driving cylinder device 26 to be brought into close contact with each other or to be separated from each other. A blow molding female mold 27 is formed by bringing the drive-side movable portion 22a and the driven-side movable portion 22b into close contact with each other. In the present embodiment, the blow molding female molds 27 is formed by arranging six sets of the drive-side movable portion 22a and the driven-side movable portion 22b arranged in the up-down direction, and two sets of the drive-side movable portions 22a and the driven-side movable portions 22b are disposed side by side in the second direction. The drive-side movable portion 22a is connected to a piston rod 26a of the split mold driving cylinder device 26, and is directly moved by the split mold driving cylinder device 26. The driven-side movable portion 22b is connected to the drive-side movable portion 22a of another set, and is moved in the second direction to come into contact with or separate from the drive-side movable portion 22a of its own set. For example, the split mold driving cylinder device 26 can be exemplified as a pneumatic cylinder device.

The first bottom mold 23 is attached to the movable platen 21. A through-hole 23a penetrating in the first direction is formed in the first bottom mold 23. The through-hole 23a is disposed on an extension line of the center line of the final molding product 600 in a state in which the drive-side movable portion 22a and the driven-side movable portion 22b are mold-closed, and forms a space in which the second bottom mold 24 can be disposed. A recessed portion 23b recessed from a contact surface of the first bottom mold 23 with the movable blow split mold 22 is formed around the through-hole 23a. The recessed portion 23b may not be formed around the through-hole 23a.

The second bottom mold 24 is a columnar member, and is disposed in the through-hole 23a of the first bottom mold 23. The second bottom mold 24 is disposed to slightly protrude from the recessed portion 23b of the first bottom mold 23 to the first side in the first direction. The diameter of the second bottom mold 24 is slightly smaller than the diameter of the through-hole 23a of the first bottom mold 23. Therefore, a gap is formed between the first bottom mold 23 and the second bottom mold 24 in a state in which the second bottom mold 24 is disposed in the through-hole 23a.

The suction device 25 is composed of a vacuum pump or the like, and suctions the final molding product 600. Specifically, the suction device 25 suctions the final molding product 600 by using a gap formed between the first bottom mold 23 and the second bottom mold 24 as a passage for air during suction.

The intermediate mold 30 has a rotating frame 35 that is rotatably attached to the intermediate mold support frame 31, and a core mold frame 50 that is non-rotatably attached to the intermediate mold support frame 31.

Here, the intermediate mold support frame 31 includes rectangular parallelepiped leg portions 32 that are disposed at both end portions in the second direction and are molded such that the up-down direction is a longitudinal direction and the first direction is a short direction, a top plate portion 33u that connects upper portions of the both leg portions 32, and a bottom portion 33b that connects lower portions of both the leg portions 32. A cylindrical support column 34 that is attached to penetrate the leg portion 32 in the second direction is fixed to a central portion of each of the leg portions 32 in the up-down direction. In addition, a through-hole (not shown) in the first direction through which the tie bar 520 passes is formed in the upper portion and the lower portion of each of the leg portions 32.

The rotating frame 35 is attached to the outer periphery of the support column 34 via a bearing member 36 such as a ball bearing, and is rotatable with respect to the intermediate mold support frame 31 with the center line of the support column 34 as a rotation center. In addition, in the present embodiment, an annular driven gear 37 is attached to a side surface of the rotating frame 35, and a drive gear 38b attached to a rotary shaft 38a of an electric motor 38 meshes with the driven gear 37. Accordingly, the rotating frame 35 rotates around the support column 34 by the operation of the electric motor 38.

The intermediate mold 30 includes a plurality of guide bars 39 attached to the rotating frame 35 to extend in the first direction, a gripping frame 40 attached to the guide bar 39 to be slidable in the first direction, and a restricting portion 45 that restricts movement of the gripping frame 40 with respect to the guide bar 39. In the present embodiment, the intermediate mold 30 has one guide bar 39 at each of an upper portion and a lower portion, which is each of both end portions in the second direction, at a first-side end portion of the rotating frame 35 in the mold opening state shown in FIGS. 1 and 2. In addition, a second-side end portion of the rotating frame 35 has one guide bar 39 at the upper portion and the lower portion, which is each of both end portions in the second direction. That is, the intermediate mold 30 according to the present embodiment has a total of eight guide bars 39. However, the intermediate mold 30 may have a total of four guide bars extending to both sides of the stationary mold 10 side and the movable mold 20 side, with each guide bar provided at each of an upper portion and a lower portion of each of both end portions in the second direction.

In the state shown in FIGS. 1 and 2, one gripping frame 40 is provided at each of both end portions of the rotating frame 35 in the first direction. The gripping frame 40 is attached to be slidable with respect to the four guide bars 39 provided on the same side with respect to the center line of the support column 34, and to be lockable to and releasable from tip parts 39a of the guide bars 39. In the state shown in FIGS. 1 and 2, the gripping frame 40 is locked to the tip part 39a of the guide bar 39 by the restricting portion 45, and is not slidable with respect to the guide bar 39. When the fitting between the restricting portion 45 and the tip part 39a of the guide bar 39 is released, the gripping frame 40 is slidable with respect to the guide bar 39.

The gripping frame 40 has a gripping device 41 that molds or grips an opening portion 620 of the final molding product 600. The gripping device 41 has a screw split mold 42 that molds or grips the opening portion 620, a slide plate 43 to which the screw split mold 42 is attached, and a gripping release member 44 that releases the gripping of the opening portion 620. The gripping release member 44 is driven by a gripping release driving device (not shown). The screw split mold 42 molds the opening portion 620 in a mold closed state during the injection molding and grips the opening portion 620 in the mold closed state during the blow molding. In addition, the screw split mold 42 releases the opening portion 620 by performing mold opening after the blow molding is completed.

More specifically, the screw split mold 42 has a configuration that can be split in the second direction, and each half-split portion of the screw split mold 42 is attached to each half-split portion of the slide plate 43. In addition, the half-split portion of the slide plate 43 is attached to the gripping frame 40 to be slidable in the second direction. The gripping release member 44 includes a configuration that can be split in the second direction, and each of the half-split portions of the gripping release members 44 is attached to the half-split portion of the slide plate 43. When the gripping release member 44 is pushed apart in the second direction, the half-split portions of the slide plate 43 and the half-split portions of the screw split mold 42 are also pushed apart in the second direction and split. Accordingly, at the blow station, the gripping of the opening portion 620 of the final molding product 600 is released after the blow molding is completed.

In the present embodiment, the screw split mold 42 is provided at a position corresponding to the female mold portion 12 and the blow molding female mold 27 of the movable blow split mold 22, which are attached to the stationary mold 10. That is, the screw split molds 42 form two rows each having six screw split molds arranged in the up-down direction in the state shown in FIGS. 1 and 2.

The restricting portion 45 is releasably connected to a tip part (not shown) of an injection-side member (not shown) attached to the stationary platen 11, and is operated by the tip part of the injection-side member to lock or release the tip part 39a of the guide bar 39. In addition, the restricting portion 45 is also releasably connected to a tip part (not shown) of a blow-side member (not shown) attached to the movable platen 21 or the first bottom mold 23, and is operated by the tip part of the blow-side member to lock or release the tip part 39a of the guide bar 39.

The core mold frame 50 is fixed to the support column 34, and is non-rotatably attached to the intermediate mold support frame 31.

An injection core mold 51 is attached to a surface of the core mold frame 50 on the stationary platen 11 side, and a blow guide 52 is attached to a surface of the core mold frame 50 on the movable platen 21 side.

The injection core mold 51 has a base portion 51a and a male mold portion 51b, and forms a cavity 17 having the shape of the preform 610 between the injection core mold 51 and the female mold portion 12 in the mold closed state.

The blow guide 52 includes a base portion 52a, and forms a blow molding space having a shape of the final molding product 600 in the mold closed state by being brought into close contact with an inlet of the blow molding female mold 27 formed by the drive-side movable portion 22a and the driven-side movable portion 22b being brought into close contact with each other.

In addition, the intermediate mold 30 has a stretching rod 53 that can protrude from a base portion 52a of the blow guide 52, a connecting plate 54 to which base portions of a plurality of the stretching rods 53 are attached, and a stretching rod driving device 55 for protruding the stretching rod 53. For example, the stretching rod driving device 55 can be exemplified as a pneumatic cylinder device. For example, the stretching rod driving device 55 can be exemplified as being attached to an outer surface of an upper portion and an outer surface of a lower portion of the core mold frame 50. The connecting plate 54 is connected to a piston rod of the stretching rod driving device 55. When the stretching rod driving device 55 operates, the connecting plate 54 connected to the piston rod moves, and the stretching rod 53 protrudes into the preform 610. In the present embodiment, the final molding product 600 is molded from the preform 610 by performing the stretching blow molding of performing the blow molding by causing the stretching rod 53 to protrude into the preform 610 and blowing air into the preform 610 at a pressure enough to expand the preform while stretching the stretching rod 53.

In addition, the injection blow molding machine 1 includes an intermediate mold driving cylinder device 15 that moves the intermediate mold support frame 31 in the first direction with respect to the stationary platen 11, and a connecting rod 16 connected to a piston rod of the intermediate mold driving cylinder device 15. The intermediate mold driving cylinder device 15 is fixed to the stationary platen 11, and the connecting rod 16 is attached to the intermediate mold support frame 31. The intermediate mold driving cylinder device 15 is operated to move the intermediate mold support frame 31 with respect to the stationary platen 11. Accordingly, the injection blow molding machine 1 can perform the injection molding and the blow molding by performing the mold closing, the mold clamping, and the mold opening at separate timings at the injection station and the blow station.

In addition, the injection blow molding machine 1 has a control device 70 that controls the injection blow molding machine 1. The control device 70 includes a central processing unit (CPU) (not shown), a read only memory (ROM) (not shown) that is a storage area for storing a program, and a random access memory (RAM) (not shown) that is an execution area of the program. The control device 70 realizes various functions by causing the CPU to execute a program stored in a ROM or a storage device such as a hard disk drive (HDD) or a semiconductor memory. In addition, detection results from various sensors are input to the control device 70. The control device 70 controls the operations of the injection device (not shown), a mold clamping device (not shown), the intermediate mold driving cylinder device 15, the electric motor 38, the gripping release driving device (not shown), the stretching rod driving device 55, and the like, based on the detection results from the various sensors. Hereinafter, the operation of the injection blow molding machine 1 performed based on the control by the control device 70 will be described.

### (Operation)

The injection blow molding machine 1 according to the present embodiment molds twelve preforms 610 equal to the number the female mold portions 12 by the injection molding at the injection station in one molding cycle. In addition, the injection blow molding machine 1 performs, at the blow station, the blow molding by using the number of preforms 610 molded at the injection station in the previous molding cycle, and molds twelve final molding products 600.

First, the mold clamping device (not shown) operates from a state in which the mold opening is performed at the injection station and the blow station shown in FIGS. 1 and 2, and the mold closing is started. Accordingly, the movable platen 21 moves from the mold opening state to the mold closed state, that is, moves to approach the stationary platen 11. Then, while the movable platen 21 moves from the mold opening state to the mold closed state, the intermediate mold driving cylinder device 15 operates, and the intermediate mold support frame 31 moves from the mold opening state to the mold closed state, that is, moves to approach the stationary platen 11.

In addition, as the intermediate mold support frame 31 approaches the stationary platen 11, the restricting portion 45 of the gripping frame 40 that is fitted to the tip part 39a of the guide bar 39 attached to the side surface of the rotating frame 35 on the stationary platen 11 side comes into contact with the tip part (not shown) of the injection-side member (not shown) attached to the stationary platen 11. Accordingly, the fitting between the restricting portion 45 and the tip part 39a of the guide bar 39 is released, and the lock between the gripping frame 40 and the guide bar 39 is released.

Similarly, as the movable platen 21 moves from the mold opening state to the mold closed state, the movable platen 21 approaches the intermediate mold support frame 31. Then, the restricting portion 45 of the gripping frame 40 that is fitted to the tip part 39a of the guide bar 39 attached to a side surface of the rotating frame 35 on the movable platen 21 side comes into contact with the tip part (not shown) of the blow-side member (not shown) attached to the movable platen 21 or the first bottom mold 23. Accordingly, the fitting between the restricting portion 45 and the tip part 39a of the guide bar 39 is released, and the lock between the gripping frame 40 and the guide bar 39 is released.

Before the movable platen 21 moves from the mold opening state to the mold closed state, the split mold driving cylinder device 26 operates to move and close the drive-side movable portion 22a and the driven-side movable portion 22b in the second direction to form the blow molding female mold 27.

Then, when the movable platen 21 is in the mold closed state, the mold closing is completed at the injection station and the blow station. In this case, since the gripping frame 40 at the injection station and the blow station is unlocked from the guide bar 39, the gripping frame 40 is pushed by the injection-side member (not shown) or the blow-side member (not shown) to slides with respect to the guide bar 39, and comes into contact with the core mold frame 50.

In this case, as shown in FIG. 3A, at the injection station, each of the male mold portions 51b enters each of the female mold portions 12 attached to the stationary mold 10. In addition, the cavity 17 is formed between the inner surfaces of the female mold portion 12 and the screw split mold 42 and the outer surface of the male mold portion 51b. Then, as shown in FIG. 3B, the resin injected by the injection device is filled in the cavity 17. Even after the filling of the resin is completed, the mold closed state continues, and the resin in the cavity is cooled.

At the blow station, as shown in FIG. 4A, the opening portion of the blow molding female mold 27 formed by the drive-side movable portion 22a and the driven-side movable portion 22b is in a state in which the screw split mold 42 gripping the opening portion 620 of the preform 610 is pressed. Accordingly, the flange portion of the preform 610 is pressed against an outer surface of the opening portion of the blow molding female mold 27, and a portion of the preform 610 beyond the flange portion enters the blow molding female mold 27. In addition, a tip part 52b of the base portion 52a of the blow guide 52 enters the opening portion 620 of the preform 610. Then, the stretching rod driving device 55 operates, the stretching rod 53 protrudes toward the deep side of the blow molding female mold 27, and at the same time, air having a pressure enough to expand the preform is blown into the inside of the preform 610, thereby expanding the preform 610 and pressing the preform 610 against an inner surface of the blow molding female mold 27. Accordingly, as shown in FIG. 4B, a vial-shaped or bottle-shaped bottomed container having a shape of the inner surface of the blow molding female mold 27 is molded as the final molding product 600. When the stretching is completed, the stretching rod 53 is returned to its original position from the protruding state. Then, when the blow molding is completed, a mold clamping force applied to the movable platen 21 by the mold clamping device is released.

Thereafter, the movable platen 21 moves in a direction away from the core mold frame 50 while maintaining a positional relationship between the drive-side movable portion 22a and the driven-side movable portion 22b, and the gripping device 41. Then, when a predetermined gap is formed between the screw split mold 42 and the blow guide 52, the drive-side movable portion 22a and the driven-side movable portion 22b move in the second direction. In addition, the screw split mold 42 is pushed apart and opened in the second direction, thereby releasing the opening portion 620. Then, when the spacing between the drive-side movable portion 22a and the driven-side movable portion 22b is at least larger than the outer diameter of the final molding product 600, the final molding product 600 falls downward from between the drive-side movable portion 22a and the driven-side movable portion 22b. The final molding product 600 is discharged below the injection blow molding machine 1 and is housed in a housing device (not shown).

Thereafter, the intermediate mold driving cylinder device 15 operates, and the intermediate mold support frame 31 moves from the mold closed state to the mold opening state, that is, moves away from the stationary platen 11. Since the restricting portion 45 of the gripping frame 40 at the injection station is fitted to the tip part (not shown) of the injection-side member (not shown), the gripping frame 40 slides in the axial direction of the guide bar 39 even when the intermediate mold support frame 31 moves toward the mold opening state. Therefore, the screw split mold 42 maintains a state of being fitted to a portion near the inlet of the female mold portion 12. As a result, since the core mold frame 50 moves together with the intermediate mold support frame 31, the male mold portion 51b is removed from the female mold portion 12 attached to the stationary mold 10.

Thereafter, when the gripping frame 40 reaches the tip part 39a of the guide bar 39, the restricting portion 45 releases the fitting with the tip part of the injection-side member and fits with the tip part 39a of the guide bar 39. Thus, the gripping frame 40 and the guide bar 39 are locked together. Therefore, when the intermediate mold support frame 31 further moves away from the stationary platen 11, the gripping frame 40 also moves together. Thus, the screw split mold 42 is removed from the female mold portion 12. In this case, since the half-split portions of the screw split mold 42 are biased in the center direction by a biasing member and are coupled to each other, the opening portion 620 of the preform 610 is gripped.

Accordingly, the gripping frame 40 at the injection station reaches a position away from the stationary mold 10 in a state in which the screw split mold 42 has gripped all the twelve preforms 610.

Subsequently, the electric motor 38 operates, and the rotating frame 35 is rotated about the center line of the support column 34. Accordingly, the gripping frame 40 in which the screw split mold 42 has gripped the preform 610 moves from the injection station to the blow station, and the other gripping frame 40 moves from the blow station to the injection station.

Then, when the rotation of the rotating frame 35 is completed, the mold opening is performed at the injection station and the blow station. Accordingly, one molding cycle is completed. Thereafter, the above-described operation is repeated and executed, and a predetermined number of molding cycles are repeated.

FIGA. 5A to 5D are views showing an example of an injection blow molding method.

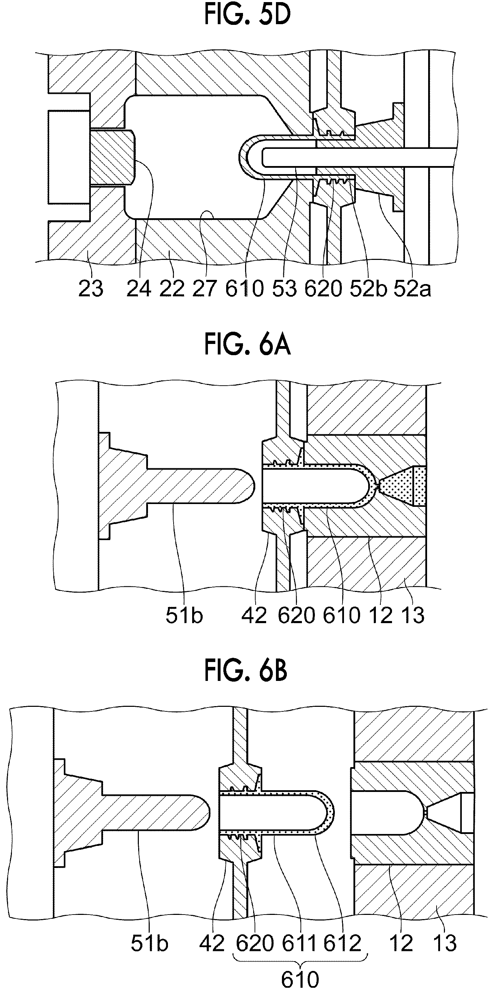

FIGS. 6A and 6B are views showing an example of a mold release process according to the embodiment.

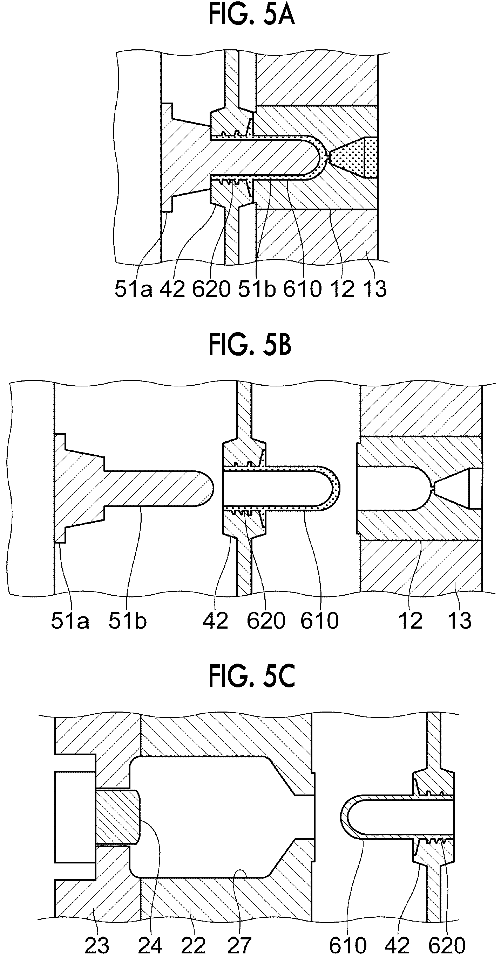

As described above, the injection blow molding method for molding the final molding product 600 includes an injection process of molding the preform 610 on the inner surfaces of the male mold portion 51b, the female mold portion 12, and the screw split mold 42 (an example of a gripping mold portion) as shown in FIG. 5A. In addition, the injection blow molding method includes a mold release process of releasing the preform 610 from the female mold portion 12 and the male mold portion 51b in a state in which the screw split mold 42 has gripped the preform 610, as shown in FIG. 5B. In addition, as shown in FIGS. 5C and 5D, the injection blow molding method includes a transition process of moving the preform 610 from the injection station to the blow station, and a blow process of blowing air into the preform 610 gripped by the screw split mold 42. Then, in the mold release process according to the present embodiment, as shown in FIGS. 6A and 6B, the male mold portion 51b is separated from the preform 610 before the preform 610 is released from the female mold portion 12.

This is due to the following reasons.

The temperature of the preform 610 after the transition process is desirable as follows. That is, it is desirable that the temperature of the trunk portion 611 of the preform 610 is 90°C or higher and lower than 120°C, and the temperature of the tip part 612 of the preform 610 is 70°C or higher and lower than 100°C. As shown in FIG. 6B, the trunk portion 611 is a portion having a columnar appearance, and the tip part 612 is a portion of which the outer diameter, when cut by a plane perpendicular to a center line direction of the trunk portion 611, is gradually reduced from the trunk portion 611 side toward the tip end side.

In a case where the temperature of the trunk portion 611 is lower than 90°C and the temperature of the tip part 612 is lower than 70°C, even if the air having a pressure enough to expand the preform 610 is blown into the inside of the preform 610 in the blow process, the preform 610 hardens without fully bulging. When the preform 610 hardens without fully bulging, the stretching rod 53 may break through the preform 610 or fail to take the shape of the final molding product 600. On the other hand, in a case where the temperature of the trunk portion 611 exceeds 120°C and the temperature of the tip part 612 exceeds 100°C, a recessed portion (in other words, a sink mark) is generated in an inner portion on a bottom portion side rather than the opening portion 620 of the final molding product 600 due to the extension of the preform 610 when the preform 610 is released from the female mold portion 12. In addition, the stretching rod 53 may break through the preform 610 even when the temperature of the preform 610 is high.

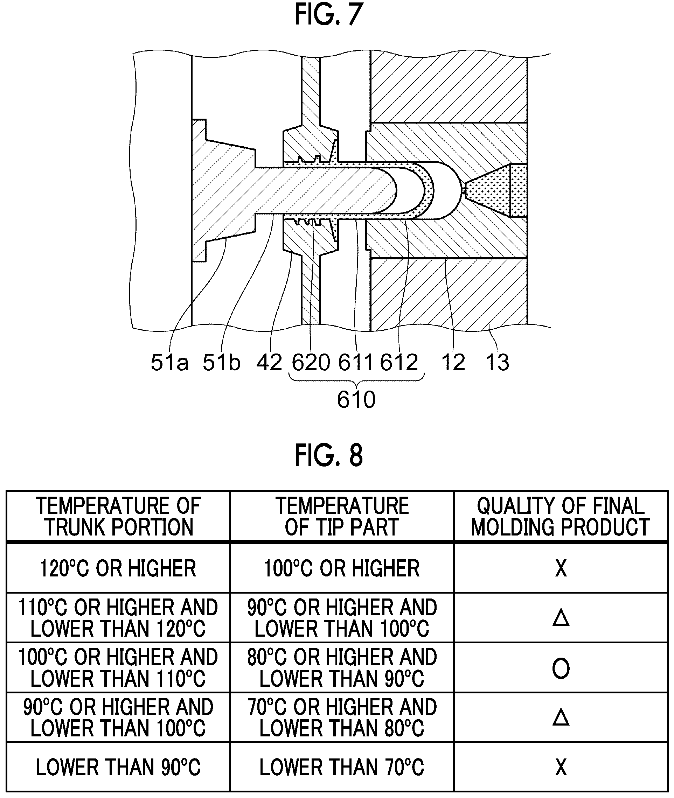

FIG. 7 is a view showing an example of a mold release process according to a comparative example.

Here, as shown in FIG. 7, a case where the timing at which the preform 610 is released from the female mold portion 12 and the timing at which the male mold portion 51b is separated from the preform 610 are the same is considered the mold release process according to the comparative example.

In the mold release process according to the comparative example, the temperature of the tip part 612 is a temperature (hereinafter, may be referred to as a "temperature suitable for mold release") suitable for the separation from the female mold portion 12. For example, the male mold portion 51b is located inside the preform 610 until a temperature (for example, 100°C) is reached. Therefore, the heat of the preform 610 is dissipated via the male mold portion 51b and the female mold portion 12 until the temperature of the tip part 612 reaches a temperature suitable for mold release. As a result, there is a possibility that the temperature of the trunk portion 611 of the preform 610 after the transition process is lower than 90°C.

On the other hand, in the mold release process according to the present embodiment, as shown in FIGS. 6A and 6B, the male mold portion 51b is separated from the preform 610 before the preform 610 is released from the female mold portion 12. Thus, it is difficult to dissipate the heat of the preform 610 via the male mold portion 51b. Therefore, the temperature of the trunk portion 611 of the preform 610 after the transition process is higher than that in the case of the mold release process according to the comparative example. As a result, the temperature of the preform 610 can be set to a temperature at which the preform 610 can be released with high accuracy, and can be set to a temperature at which the preform can be expanded by blowing air at a pressure enough to expand the preform.

As described above, regarding the temperature of the preform 610 after the transition process, it is desirable that the temperature of the trunk portion 611 is 90°C or higher and lower than 120°C, and the temperature of the tip part 612 is 70°C or higher and lower than 100°C. Therefore, when the temperature of the trunk portion 611 is higher than the temperature of the tip part 612, the temperatures of both the trunk portion 611 and the tip part 612 are likely to fall within the above temperature range. In the mold release process according to the present embodiment, the temperature drop of the trunk portion 611 after the injection process can be suppressed more than in the mold release process according to the comparative example. Thus, the temperature of the trunk portion 611 after the transition process can be made higher than the temperature of the tip part 612 with high accuracy. In addition, both the preform 610 molded by using the mold release process according to the present embodiment and the preform 610 molded by using the mold release process according to the comparative example are cooled in the transition process such that the tip part 612 is cooled more than the trunk portion 611. Therefore, in a case where the temperature of the trunk portion 611 before the transition process and the temperature of the tip part 612 are the same, the temperature of the trunk portion 611 is higher than the temperature of the tip part 612 after the transition process.

FIG. 8 is a view showing an example of a relationship between the temperature of the trunk portion 611 and the tip part 612 of the preform 610 and the quality of the final molding product 600 after the transition process. The temperature shown in FIG. 8 is the temperature of the preform 610 after the transition process, the temperature of the trunk portion 611 is the maximum temperature at the end portion on the opening portion 620 side, and the temperature of the tip part 612 is the maximum temperature at the tip part 612. The final molding product 600 is a 110 (ml) bottle container for beverages, which is molded using polyethylene terephthalate (PET). It is considered that the same result as that shown in FIG. 8 is obtained even in a case where the final molding product 600 is a bottle container having a volume of 65 (ml) or more and 200 (ml) or less.

As shown in FIG. 8, in a case where the temperature of the trunk portion 611 is 100°C or higher and lower than 110°C and the temperature of the tip part 612 is 80°C or higher and lower than 90°C, the quality of the final molding product 600 was excellent.

On the other hand, in a case where the temperature of the trunk portion 611 is 90°C or higher and lower than 100°C and the temperature of the tip part 612 is 70°C or higher and lower than 80°C, the quality of the majority of the final molding products 600 was excellent, but some of the preforms 610 did not fully bulge and failed to take the shape of the final molding product 600. Therefore, in a case where the temperature of the trunk portion 611 is 90°C or higher and lower than 100°C and the temperature of the tip part 612 is 70°C or higher and lower than 80°C, there is a concern that the expansion is insufficient (in other words, the blow is insufficient).

In addition, in a case where the temperature of the trunk portion 611 is 110°C or higher and lower than 120°C and the temperature of the tip part 612 is 90°C or higher and lower than 100°C, the quality of the majority of the final molding products 600 was excellent, but a recessed portion (in other words, a sink mark) was generated in some of the final molding products 600. Therefore, in a case where the temperature of the trunk portion 611 is 110°C or higher and lower than 120°C and the temperature of the tip part 612 is 90°C or higher and lower than 100°C, there is a concern that a recessed portion may be generated in the final molding product 600.

From the above, it is desirable that the temperature of the trunk portion 611 of the preform 610 after the transition process is 100°C or higher and lower than 110°C and the temperature of the tip part 612 is 80°C or higher and lower than 90°C. Accordingly, the quality of the final molding product 600 can be made excellent with high accuracy.

In addition, the present inventors have obtained, through intensive research, the knowledge that the quality of the final molding product 600 is improved in a case where a temperature difference between the temperature of the end portion, on the opening portion 620 side, of the trunk portion 611 of the preform 610 and the temperature of the tip part 612 is 20°C, which is a temperature balance.

For example, in a case where the temperature of the trunk portion 611 is 110°C or higher and lower than 120°C, in a case where the temperature of the tip part 612 is 70°C or higher and lower than 80°C, the tip part 612 is less likely to bulge than in a case where the temperature of the tip part 612 is 80°C or higher and lower than 90°C. Therefore, the trunk portion 611 is more likely to extend. As a result, in particular, the shape of a shoulder portion, which is a portion near the opening portion 620 in the final molding product 600, is difficult to follow the shape of the blow molding female mold 27.

In addition, in a case where the temperature of the trunk portion 611 is 90°C or higher and lower than 100°C and the temperature of the tip part 612 is 90°C or higher and lower than 100°C, the temperature of the tip part 612 is higher than or equal to the temperature of the trunk portion 611. As a result, the tip part 612 is more likely to extend than the trunk portion 611, or the trunk portion 611 and the tip part 612 extend equally. Therefore, for example, a recessed portion (in other words, a sink mark) is generated in the tip part 612 due to the extension of the tip part 612 when the preform 610 is released from the female mold portion 12, and there is an increasing concern that the appearance may be poor.

In addition to the mold release process according to the present embodiment, the present inventors have obtained the knowledge that the preform 610 can be made to have a temperature balance at which the quality of the final molding product 600 is improved by making the thickness of the tip part 612 larger than the thickness of the trunk portion 611. Therefore, in the injection process in the above-described injection blow molding method, it is preferable to mold the preform 610 such that the thickness of the tip part 612 of the preform 610 is larger than the thickness of the trunk portion 611 of the preform 610. Accordingly, the quality of the final molding product 600 can be made excellent with high accuracy.

In addition, the thickness of the tip part 612 of the preform 610 can be exemplified as being 1.1 times or more and 1.3 times or less the thickness of the trunk portion 611. For example, the thickness of a portion of the tip part 612 on the tip end side may be set to be 1.2 times or more and 1.3 times or less the thickness of the trunk portion 611 on the opening portion 620 side, and the thickness of the tip part 612 on the trunk portion 611 side may be set to be 1.1 times or more and 1.2 times or less the thickness of the trunk portion 611 on the opening portion 620 side. In addition, it is preferable that the thickness of the tip part 612 gradually increases from the portion on the trunk portion 611 side to the portion on the tip end side.

### Brief Description of the Reference Symbols

1: Injection blow molding machine
10: Stationary mold
11: Stationary platen
12: Female mold portion
13: Cavity plate
20: Movable mold
21: Movable platen
31: Intermediate mold support frame
35: Rotating frame
39: Guide bar
39a: Tip part
40: Gripping frame
41: Gripping device
42: Screw split mold (example of gripping mold portion)
45: Restricting portion
50: Core mold frame
51b: Male mold portion
600: Final molding product
610: Preform
611: Trunk portion
612: Tip part

## Claims

1. An injection blow molding apparatus (1) comprising:
a male mold portion (51b);
a female mold portion (12);
a gripping mold portion (42);
an injection unit that injects a resin for molding a preform (610) into inner surfaces of the female mold portion (12), the male mold portion (51b), and the gripping mold portion (42);
a blow unit that is released from the female mold portion (12) and the male mold portion (51b) and blows air into the preform (610) in a state in which the gripping mold portion (42) has gripped the preform (610); and
a control unit (70) that releases the preform (610) from the male mold portion (51b) before the preform (610) is released from the female mold portion (12) in a mold release process of releasing the preform (610) from the female mold portion (12) and the male mold portion (51b).

2. The injection blow molding apparatus (1) according to claim 1,
wherein the control unit (70) sets a temperature of a trunk portion (611) of the preform (610) after the mold release process and before the blow unit blows to be higher than a temperature of a tip part (612) of the preform (610).

3. The injection blow molding apparatus (1) according to claim 2,
wherein the control unit (70) sets the temperature of the trunk portion (611) of the preform (610) to 90°C or higher and lower than 120°C, and sets the temperature of the tip part (612) of the preform (610) to 70°C or higher and lower than 100°C.

4. The injection blow molding apparatus (1) according to claim 3,
wherein the control unit (70) sets the temperature of the trunk portion (611) of the preform (610) to 100°C or higher and lower than 110°C, and sets the temperature of the tip part (612) of the preform (610) to 80°C or higher and lower than 90°C.

5. The injection blow molding apparatus (1) according to any one of claims 1 to 4,
wherein the injection unit molds the preform (610) such that a thickness of a tip part (612) of the preform (610) is larger than a thickness of a trunk portion (611) of the preform (610).

6. An injection blow molding method comprising:
an injection process of molding a preform (610) on inner surfaces of a male mold portion (51b), a female mold portion (12), and a gripping mold portion (42);
a mold release process of releasing the preform (610) from the female mold portion (12) and the male mold portion (51b) in a state in which the gripping mold portion (42) has gripped the preform (610); and
a blow process of blowing air into the preform (610) in a state in which the gripping mold portion (42) has gripped the preform (610),
wherein in the mold release process, the male mold portion (51b) is released from the preform (610) before the preform (610) is released from the female mold portion (12).

7. The injection blow molding method according to claim 6,
wherein a temperature of a trunk portion (611) of the preform (610) after the mold release process and before the blow process is set to be higher than a temperature of a tip part (612) of the preform (610).

8. The injection blow molding method according to claim 7,
wherein the temperature of the trunk portion (611) of the preform (610) is set to 90°C or higher and lower than 120°C, and the temperature of the tip part (612) of the preform (610) is set to 70°C or higher and lower than 100°C.

9. The injection blow molding method according to claim 8,
wherein the temperature of the trunk portion (611) of the preform (610) is set to 100°C or higher and lower than 110°C, and the temperature of the tip part (612) of the preform (610) is set to 80°C or higher and lower than 90°C.

10. The injection blow molding method according to any one of claims 6 to 9,
wherein in the injection process, the preform (610) is molded such that a thickness of a tip part (612) of the preform (610) is larger than a thickness of a trunk portion (611) of the preform (610).
